# EUROPEAN PATENT APPLICATION

(11) **EP 2 168 800 A1**
(43) Date of publication of application: **31.03.2010**
(21) Application number: 08016966.7
(22) Date of filing: 26.09.2008
(51) Int. Cl.: B60J 10/04

(54) **A corner portion for a hidden frame window run, a sealing gasket forming this run and a sealing system incorporating it**

(71) Applicant: HUTCHINSON GmbH, 52068 Aachen (DE)
(72) Inventor: Simon Jimenez, Victor Manuel, 26580 Arnedo La Rioja (ES); Hirsch, Holger, 52134 Herzogenrath (DE); Knips, Kristof, 52080 Aachen (DE)
(74) Representative: Bolinches, Michel Jean-Marie

(57) **Abstract**

The present invention relates to a corner connecting portion for a sealing gasket of a motor vehicle window glass, the gasket forming a window glass run channel of the hidden frame type.

This corner connecting portion (17) is designed to connect a top segment to an ascending segment of the glass run channel, and it comprises:
- an upper part (24) comprising an upper face designed to be sealingly mounted under the vehicle bodywork and a lower face (26) designed to be mounted on said pillar by mounting means, and
- a lower part (28) which is connected to the upper part by forming a "c" designed to surround an outer end (30b) of said pillar and which is designed to be sealingly in contact with the window glass.

Said mounting means comprise a pin (27') which is inserted into a corresponding through hole (24a) formed in the upper part so as to extend from the upper face to the lower face, the pin being pushed through a pillar opening (30a) in an assembly position, to minimize the displacements of the gasket in response to ageing and fatigue cycles due to slams of the door.

## Description

The present invention relates to a corner connecting portion for a sealing gasket of a motor vehicle window glass, the gasket forming a window glass run channel of the hidden frame type. The invention also concerns such a sealing gasket incorporating it, and a sealing system for a motor vehicle window glass comprising a frame and this sealing gasket, in particular for a partially or fully stamped door.

A side window glass run channel of the hidden frame type is generally defined by a top or horizontal extruded segment connected to two ascending or vertical also extruded segments, and it usually comprises a co-extruded mounting clip of U-shaped right section with first and second mutually parallel limbs (this mounting or clamping clip is often called "carrier" by the man of the art), the first limb having first sealing lips which are designed to be mounted under and in contact with the vehicle bodywork, whereas the second limb is provided with two main secondary legs which both extend perpendicularly from this second limb and which have sealing lips towards their ends. The top segment is connected in a known manner to both ascending segments by two injection moulded corner portions which each comprise an upper part mounted on a pillar of the frame and designed to be sealingly mounted under the vehicle bodywork and a lower part surrounding this pillar and designed to be sealingly in contact with the window glass of the corresponding door.

It is known by document EP-A-1 619 060 to design such a corner connecting portion which is injection moulded and which comprises:
- an upper part with an upper face designed to be sealingly mounted under the vehicle bodywork and a lower face designed to be mounted on the pillar, and
- a lower part which is connected to the upper part so as to surround a pillar outer end and which is designed to be sealingly in contact with the window glass, this lower part comprising embedded anchoring means made of a hook designed to fix the corner portion to a pillar inner end.

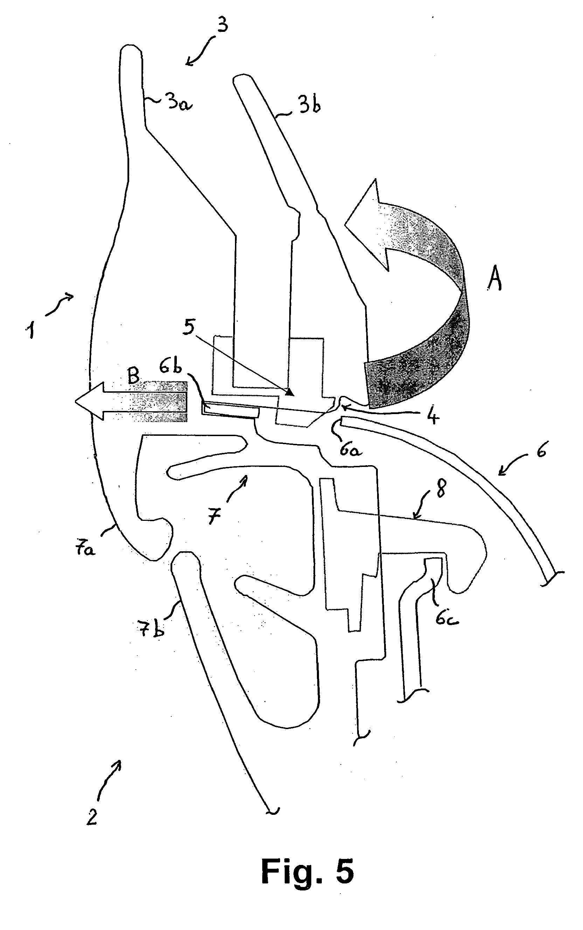

Another known embodiment for such a corner connecting portion is shown in Figure 5 which is attached to the present description, in which the upper part 1 of the corner portion 2 has an upper face 3 having upper sealing lips 3a and 3b designed to be mounted under the bodywork, and a lower face 4 differing from that of document EP-A-1 619 060 in that it is provided with a small overmoulded pin 5 designed to protrude into a hole 6a of the pillar 6. As visible in figure 5, the pin 5 is embedded into a lower zone of the upper part 1 and mutually connects both lips 3 only in this lower face 4. As for the lower part 7 of the corner portion 2, it is connected to the upper part 1 so as to surround the pillar outer end 6b and has lower sealing lips 7a and 7b designed to be in contact with the window glass, this lower part 7 also comprising an embedded anchoring hook 8 for fixing the corner portion 2 to a pillar inner end 6c.

A major drawback of the corner connecting portions according both to this document and to the prior art of figure 5 is that the application point of the force undergone by the corner portion during each door slam, which is located near the upper face of the corner upper part, is thus far above the anchoring point of the corner portion. This significant distance between both force application and anchoring points results in a stretching of the rubber material of the corner portion above this anchoring point after each door slam, which may cause after some time the corner portion turn out from its original position (see arrows A and B in figure 5) between the corresponding segments of the glass run channel, thus with a possible loss of contact of the sealing gasket with the outer face of the window glass.

As a consequence of the glass run channel moving from its nominal position after ageing and door closing cycles to a non-functional position on the door frame, it is also to be mentioned that the lips designed to be sealingly mounted under the vehicle bodywork may assure no satisfactory contact with the latter. Moreover, such displacements of the connecting corner portions and of the whole window sealing gasket may thus result at length in a bad acoustic performance for the vehicle.

One purpose of the present invention is to provide a corner connecting portion for a sealing gasket of a motor vehicle side window glass which remedies these drawbacks, the gasket forming a window glass run channel of the hidden frame type which comprises a top segment and two ascending segments, the corner portion being designed to connect said top segment to at least one of said ascending segments when mounted on a pillar of the frame, said corner portion comprising:
- a corner upper part comprising an upper face designed to be sealingly mounted under the vehicle bodywork and a lower face designed to be mounted on said pillar by mounting means, and
- a corner lower part which is connected to said upper part by substantially forming a "⊂" designed to surround an outer end of said pillar and which is designed to be sealingly in contact with the window glass.

For this purpose, said mounting means comprise a pin which is inserted into a corresponding through hole formed in said upper part so as to extend from said upper face to said lower face, said pin being designed to be pushed through an opening of said pillar in an assembly position of the pin, so that the assembled pin minimizes the displacements of the gasket in response to ageing and fatigue cycles of this corner portion due to slams of a door provided with this gasket.

It is to be noted that such a pin to be mounted through the pillar thus extends throughout the most stressed area of the corner portion during each door slam, namely that which undergoes the closing force of the door, so that the glass run channel may not be affected by the ageing and fatigue cycles of the stressed rubber of the corner portion and lastingly remains in its needed functional position as regards the window glass, the pillar and the bodywork of the vehicle.

It will also be noted that the mounting pin of the invention is separately inserted into said beforehand-shaped through hole, so as to occupy several positions throughout the latter including said assembly position where the pin partially goes beneath said lower face of the upper part and at least another preassembly position, as will be explained below. In this assembly position, this pin shall be sealingly in contact with the wall of said through hole.

By "outer end" and "inner end" of the pillar, it is meant in instant description laterally outer and inner ends, in the Y lateral direction of the width of the vehicle.

According to another feature of the invention, said pin may be a taper pin of either polygonal of circular cross-section, and said hole being formed during moulding of the corner portion.

Advantageously, said pin may be made of a more or less rigid plastic or elastomeric material or of a combination thereof, the remaining of the corner portion being preferably made of an injection moulded elastomeric composition based on at least one elastomer which may be either a usual rubber such as an EPDM, or a thermoplastic elastomer (TPE) such as a thermoplastic vulcanizate (TPV) or a styrene-ethylene-butylene-styrene copolymer (SEBS).

Said pin may be independent from the remaining of the corner portion, being separately inserted into said through hole. In a variant embodiment, said pin may advantageously be connected to the remaining of the corner portion by a connecting means such as an attachment thread or string, which is initially placed inside the injection mould with the attached pin being offset therein and upon which said elastomeric composition is overmoulded, so that the pin remains connected to the corner portion prior to be inserted into the through hole and is thus not able to be lost.

Alternatively, the inventive corner portion could be extruded and then cut according to the desired format, instead of being injection moulded.

According to another feature of the invention, said hole may have a symmetry axis which is substantially perpendicular to said lower face (i.e. a substantially vertical axis) and which preferably makes an angle of between 5 and 20° with the Z vertical direction in such a manner that this axis extends towards both the lower part and the inside of the corner portion in the Y lateral direction thereof.

Advantageously and as mentioned above, said pin is also able to occupy a preassembly position where it has a tapered free end which is substantially flush with said lower face of the corner upper part, before to be brought to said assembly position by a pushing force exerted on an opposite pushing end of the pin, so that said free end goes beyond said lower face.

According to another feature of the invention, said pin may be provided with preassembly helping means, such as gripping teeth or fins, that are formed in a preassembly part of the pin which is adjacent said pushing end, these preassembly helping means being able to limit the penetration of the pin through said hole and also preferably to prevent an undesirable withdrawal of the pin from said assembly position.

It will be noted that the assembly of the pin can be done either by the sealing gasket manufacturer or by the customer assembly line, on receiving the gasket with each corner connecting portion including said pin in a retracted preassembly position.

In a first embodiment of the invention, said pin may have a substantially rectangular cross-section, said preassembly part being provided with teeth or fins on at least two opposite faces thereof which are designed to be in frictional contact with the wall of said hole, the pin having an assembly part adjacent said free end which may extend in a tapered manner from a widening shoulder formed between both parts.

According to this first embodiment, said pushing end of the pin may be provided with a pushing head substantially forming a "T" with said preassembly and assembly parts.

In a second embodiment of the invention, said pin may have a substantially circular cross-section and may have an assembly part adjacent said free end which is provided with circumferential ribs, said pin being continuously tapered.

According to another feature of the invention, said corner lower part may comprise anchoring means designed to cooperate with said pillar for the fixation of the corner portion thereto. Said anchoring means may advantageously comprise a hook which is embedded in said lower part of the corner portion, preferably by overmoulding, and which is designed to be hooked on an inner end of said pillar.

According to another feature of the invention, said upper face of its upper part may be defined by two sealing lips which are designed to be mounted under and in contact with the vehicle bodywork and which are connected together by the wall of said hole, and said lower part of this corner portion may comprise at least two other sealing lips which are designed to be in contact with the window glass.

According to another feature of the invention, the corner connecting portion may have in side view substantially an arrows shape, having an arrow point defined by said corner upper part, and a shaft ending with a fletching both defined by said corner lower part.

A sealing gasket for a motor vehicle window glass according to the invention forms a side window glass run channel of the hidden frame type which comprises a top segment and two ascending segments, this gasket comprising a co-extruded mounting clip of U-shaped right section with first and second mutually parallel limbs, the first limb having first sealing lips which are designed to be mounted under and in contact with the vehicle bodywork, the second limb being provided with a main leg and a secondary leg which both extend perpendicularly from this second limb and which have sealing lips towards their respective ends, this glass run channel incorporating at least one corner connecting portion designed to connect said top segment to one of said ascending segments when mounted on a pillar of the frame.

This sealing gasket of the invention is **characterized in that** said at least one corner portion is as defined above.

A sealing system according to the invention for a motor vehicle side window glass comprises a frame and such a sealing gasket, and it is **characterized in that** this sealing gasket is mounted on a A-pillar and/or a B-pillar and/or a C-pillar of the vehicle, being preferably mounted on a visible B-pillar or C-pillar. By "visible pillar", it is meant as commonly known by the man of the art that the bodywork frame (i.e. the bodyside or bodycase) is visible from the outside of the vehicle, contrary to the door frame which of course remains invisible because of the sealing gasket mounted thereon.

The above-mentioned characteristics of the present invention, along with others, will be understood more clearly on reading the following description of several examples of the invention, which are given for illustrative purposes and are not intended to limit the invention, said description referring to the attached drawings, wherein:
figure 1 is a top view of a vehicle having doors whose side windows extend in three different directions and which are each designed to receive a sealing gasket according to the invention,
figures 2 and 3 are diagrammatic side views of two glass run channels according to the invention, respectively for the front door and the rear door of the vehicle of figure 1,
figure 4 is a section view of a sealing gasket forming a top segment of a glass run channel of the hidden frame type according to an example of the invention,
figure 4a is a side view of a corner connecting portion of the invention which connects a top segment according to figure 4 and an ascending segment of a glass run channel according to either figure 2 or 3,
figure 5 is a lateral section view, taken along the V-V section line of figure 4a, of a corner connecting portion according to the prior art,
figure 6 is a lateral section view, taken along the same section line as figure 5, of a corner connecting portion according to the invention which is devoid of its pin to be mounted through the corner upper part,
figures 7 and 8 are two perspective views respectively showing two first and second embodiments for a pin of the invention to be inserted through the corner upper part and partially through a frame pillar,
figure 9 is a perspective view at an enlarged scale of an inventive pin according to a variant embodiment of that of figure 7, and
figures 10 and 11 are two lateral section views, each taken along the same section line as figure 5, of the inventive corner connecting portion according to figure 6 provided with the pin of figure 9, figure 10 showing this pin in dotted lines in a preassembly position whereas figure 11 shows it also in dotted lines but in an assembly position.

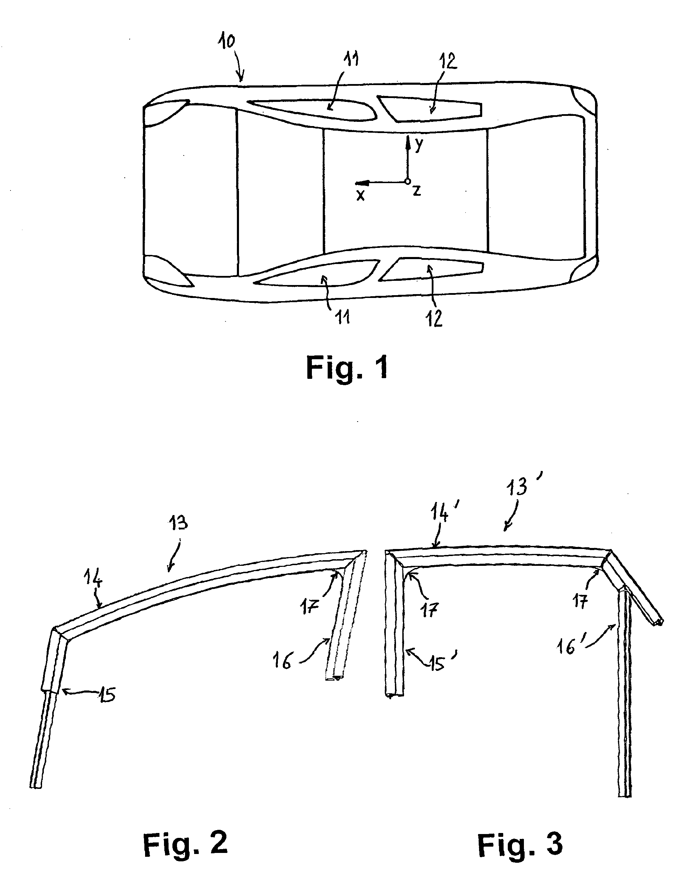

In figure 1 is shown a vehicle 10 whose front and rear side windows 11 and 12 extend in three different directions X, Y and Z (respectively representing the length, width and height direction of the vehicle 10) and which are each designed to receive a side window sealing gasket according to the invention. Each sealing gasket comprises a glass run channel 13, 13' of the hidden frame type (see figures 2 and 3) which is usually defined by a top segment 14, 14' connected to two ascending segments 15 and 16, 15' and 16' (i.e. substantially vertical segments) by respective corner connecting portions 17.

According to the invention, at least one of these corner portions 17 is to be mounted:
- in the case of a front side window 11 shown in figure 2, on a A-pillar and/or on a B-pillar of the vehicle V (the corner portion 17 being then preferably mounted on the B-pillar as visible in figure 2), or
- in the case of a rear side window 12 shown in figure 3, on a visible B-pillar and/or on a visible C-pillar of the vehicle V.

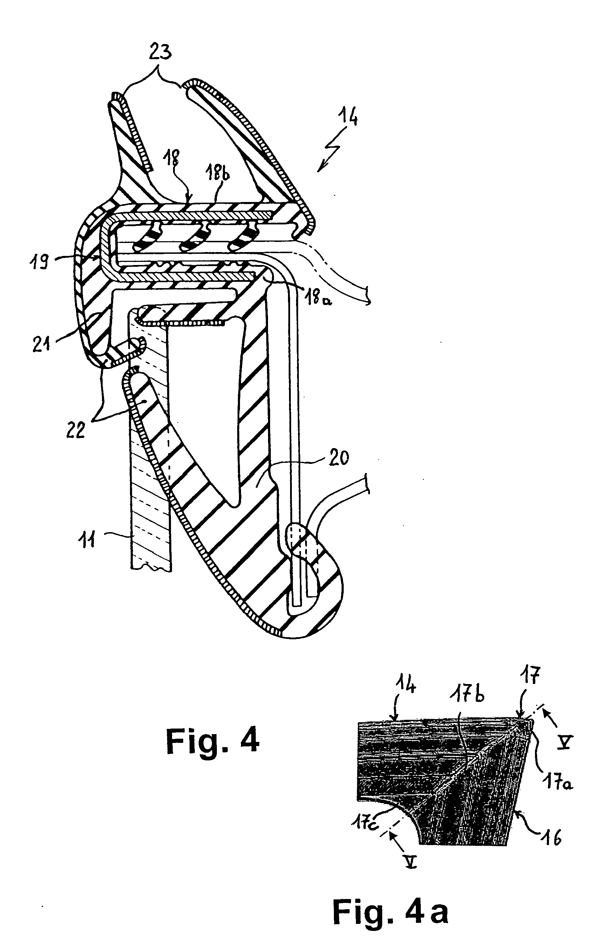

The top segment 14 of the glass run channel 13 of the hidden frame type which is shown in figure 4 comprises a mounting clip or clamping carrier 18 of U-shaped right section in which there is embedded metal reinforcement 19 also of U-shaped right section, two asymmetrical legs 20 and 21 constituting respectively a main leg and a secondary leg which project at substantially 90° from one of the limbs 18a of the mounting clip 18 and which terminate in sealing lips 22 suitable for coming into sliding contact with both faces of the window glass 11 or 12. The other limb 18b of the mounting clip 18 supports sealing lips 23 suitable for coming into contact with the bodywork of the vehicle 10.

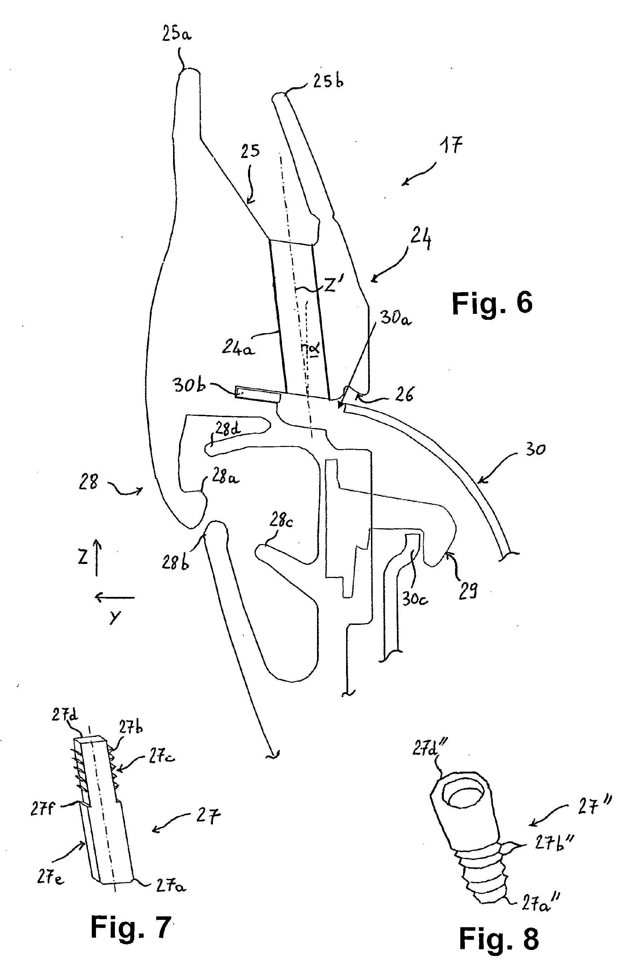

The corner connecting portion 17 according to an embodiment of the invention which is shown in Figure 4a connects together such a top segment 14 or 14' and an ascending segment 15, 16 or 15', 16' of the glass run channel 13, 13'. As visible in figure 4a, the corner portion 17 may have substantially an arrows shape, having an arrow point 17a defined by a corner upper part 24 and a shaft 17b ending with a fletching 17c, the shaft 17b and the fletching 17c defining together a corner lower part 28 (both upper and lower parts 24, 26 of the inventive corner portion 17 are shown in figure 6).

As visible in figure 6, the corner portion 17 is preferably obtained by injection moulding and comprises:
- the corner upper part 24 having an upper face 25 defined by two sealing lips 25a and 25b suitable for coming into contact under the vehicle bodywork, and a lower face 26 designed to be mounted on a pillar 30 (e.g. a metallic B-pillar) by a pin 27, 27', 27" according to the invention (see figures 7-11) which is subsequently inserted into a through hole 24a extending from the upper face 25 to the lower face 26 between lips 25a and 25b and which is designed to protrude below an opposite opening 30a of the pillar 30 so as to wedge this upper part 24 on the pillar 30 in the lateral direction Y, and
- the corner lower part 28 which is connected to the upper part 24 by forming a "⊂" designed to surround a lateral outer end 30b of the pillar 30 and which has several sealing lips 28a to 28d suitable for coming into contact with the window glass 11 or 12, this lower part 28 further having an overmoulded hook 29 designed to cooperate with a lateral inner end 30c of the pillar 30 for the anchoring of the corner portion 17 thereto.

More specifically, the through hole 24a may be pre-formed during the injection moulding process, and has a symmetry axis Z' which is substantially perpendicular to the lower face by preferably making an angle α of between 5 and 20° with the vertical direction Z in such a manner that this axis Z' extends towards both the lower part 28 and the inside in the Y direction. As will be explained below, the pin 27, 27' is designed to be pushed (downwards in the Z direction) through the pillar opening 30a into an assembly position, so that the assembled pin 27, 27', 27" minimizes the displacements of the whole glass run channel 13, 13' in response to ageing and fatigue cycles of the corner portion 17 after a number of slams of the corresponding door. This pin 27, 27', 27" is made of a rigid plastic material, such as PA 6.6 (polyamide 6.6), and the remaining of the corner portion 17 is preferably made of an injection moulded elastomeric composition for instance based on an EPDM, a TPV or a SEBS.

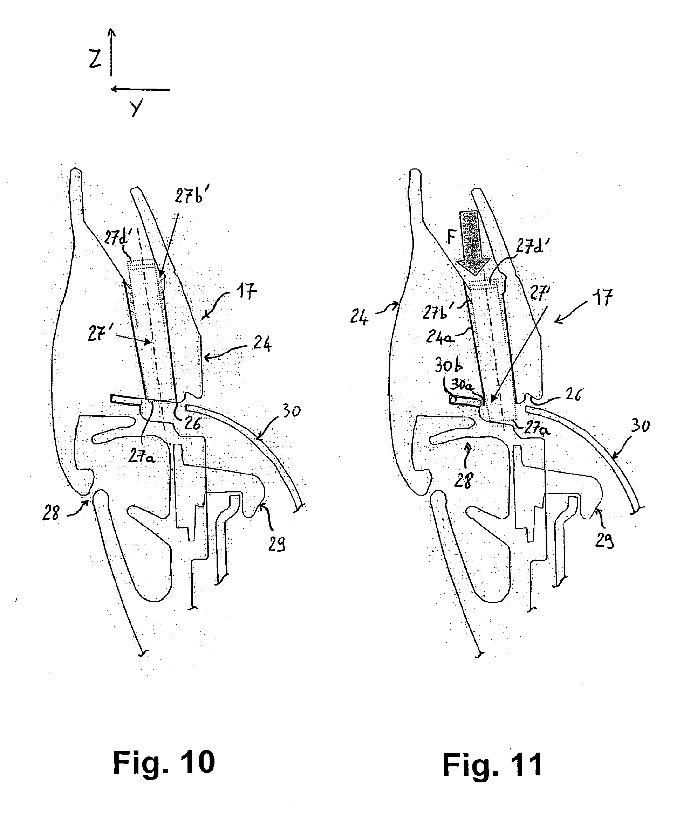

As visible in the first embodiment of figure 7, the taper pin 27, the through hole 24a and the corresponding pillar opening 30a may be of rectangular cross-section, in such a manner that a small peripheral gap of about 1 or 2 mm be provided between the opening 30a and the pin free end 27a. The pin 27 is provided with preassembly helping means comprising gripping fins 27b that are formed in an outer preassembly part 27c ("outer" means "upper" in the Z direction, considering figures 10 and 11) of the pin 27, this fins 27b being adjacent a pin pushing end 27d opposite to its free end 27a and being located on two opposite faces of this preassembly part 27c. These gripping fins 27 are suitable to limit the penetration of the pin 27 through the hole 24a in the preassembly position of figure 10, by frictional contact with the wall of this hole 24a and also to prevent its undesirable withdrawal from the assembly position of figure 11 (i.e. upwards in the Z direction).

More specifically, the pin has an assembly part 27e which includes its free end 27a and which extends in a tapered manner (e.g. in a frustum pyramidal shape) from a widening shoulder 27f formed between the preassembly and assembly parts 27c and 27e, and each fin 27b obliquely extends towards the pin pushing end 27d (i.e. opposite to the downwards pushing direction) from the corresponding face of the preassembly part 27c.

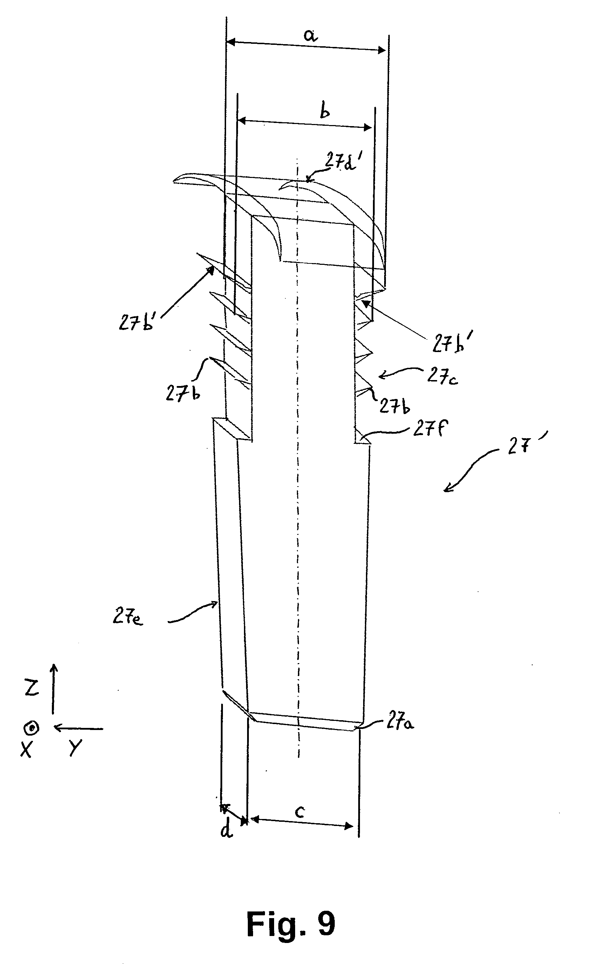

As visible in the variant embodiment of figure 9, said pushing end of the pin 27' may be provided with a pushing head 27d' substantially forming a "T" with the preassembly (to allow a better push) and assembly parts 27c and 27e. Moreover, a couple of upper fins 27b' (i.e. which are the most adjacent this pushing head 27d') are longer than the other fins 27b in the Y direction, these upper fins 27b' mainly allowing to account that the positioning of the pin 27' inside the hole 24a is not too deep. Only by way of example, the illustrated transverse dimensions of the different faces of the pin 27' may be the following:
- a = 6 mm (maximum cross-width of the preassembly part 27c in the Y direction, from one upper fin 27b' to the other one),
- b = 5.4 mm (cross-width of the preassembly part 27c in the Y direction, from one lower fin 27b to the other one),
- c = 5 mm (cross-width of the pin free end 27a in the Y direction), and
- d = 2 mm (depth of the pin free end 27a in the X direction).

As shown in the second embodiment of figure 8, the pin 27" may also be of circular cross-section, having for instance a substantially frustum conical shape between its outer pushing end 27d" and its inner free end 27a", also with preassembly helping means 27b" consisting in this example of circumferential ribs.

It will be noted that other shapes could be used for the inventive pin to make it cooperate in a frictional way with the internal wall of the hole 24a (which may be either cylindrical or prismatic), so that the either frustum conical or frustum pyramidal form of the taper pin deforms this hole wall into a tapered one, as visible in figures 10 and 11.

In the preassembly position of figure 10, the pin free end 27a is substantially flush with the lower face 26 of the corner upper part 24, before to be brought to the assembly position of figure 11 by a pushing force F exerted on the opposite pin pushing end 27d', so that the pin free end 27a goes beyond this lower face 26 and thus wedges the corner portion 17 without any risk of displacement of the latter and of the whole glass run channel 13, 13' after a number of door slams, due to the fact that the pin 27' extends during each door slam throughout the most stressed area of the corner portion 17.

## Claims

1. A corner connecting portion (17) for a sealing gasket of a motor vehicle side window glass (11, 12), the gasket forming a window glass run channel (13, 13') of the hidden frame type which comprises a top segment (14, 14') and two ascending segments (15 and 16, 15' and 16'), the corner portion being designed to connect said top segment to at least one of said ascending segments when mounted on a pillar (30) of the frame, this corner portion comprising:
- a corner upper part (24) comprising an upper face (25) designed to be sealingly mounted under the vehicle bodywork and a lower face (26) designed to be mounted on said pillar by mounting means, and
- a corner lower part (28) which is connected to said upper part by substantially forming a "⊂" designed to surround an outer end (30b) of said pillar and which is designed to be sealingly in contact with the window glass,
**characterized in that** said mounting means comprise a pin (27, 27', 27") which is inserted into a corresponding through hole (24a) formed in said upper part so as to extend from said upper face to said lower face, said pin being designed to be pushed through an opening (30a) of said pillar in an assembly position of the pin, so that the assembled pin minimizes the displacements of the gasket in response to ageing and fatigue cycles of this corner portion due to slams of a door provided with this gasket.

2. A corner connecting portion (17) according to claim 1, wherein said pin (27, 27', 27") is a taper pin of either polygonal of circular cross-section, said hole (24a) being formed during moulding of the corner portion.

3. A corner connecting portion (17) according to claim 2, wherein said pin (27, 27', 27") is made of a plastic or elastomeric material or of a combination thereof, the remaining of the corner portion being preferably made of an injection moulded elastomeric composition.

4. A corner connecting portion (17) according to any of claims 1 to 3, wherein said pin (27, 27', 27") is independent from the remaining of the corner portion, being separately inserted into said through hole (24a).

5. A corner connecting portion (17) according to claim 3, wherein said pin (27, 27', 27") is connected to the remaining of the corner portion by connecting means, such as an attachment thread or string, upon a part of which said elastomeric composition is overmoulded so that the pin remains connected to the corner portion prior to be inserted into said through hole (24a).

6. A corner connecting portion (17) according to any of the preceding claims, wherein said hole (24a) has a symmetry axis which is substantially perpendicular to said lower face (26).

7. A corner connecting portion (17) according to any of the preceding claims, wherein said pin (27, 27', 27") is also able to occupy a preassembly position where it has a tapered free end (27a, 27a") which is substantially flush with said lower face (26) of the corner upper part (24), before to be brought to said assembly position by a pushing force (F) exerted on an opposite pushing end (27d, 27d', 27d") of the pin, so that said free end goes beyond said lower face.

8. A corner connecting portion (17) according to claim 7, wherein said pin (27, 27', 27") is provided with preassembly helping means (27b, 27b', 27b"), such as gripping teeth or fins, that are formed in a preassembly part (27c) of the pin which is adjacent said pushing end (27d, 27d', 27d"), these preassembly helping means being able to limit the penetration of the pin through said hole (24) and also preferably to prevent an undesirable withdrawal of the pin from said assembly position.

9. A corner connecting portion (17) according to claim 8, wherein said pin (27, 27') has a substantially rectangular cross-section, said preassembly part (27c) being provided with teeth or fins (27b, 27b') on at least two opposite faces thereof which are designed to be in frictional contact with the wall of said hole (24a), the pin having an assembly part (27e) adjacent said free end (27a) and extending in a tapered manner from a widening shoulder (27f) formed between both parts.

10. A corner connecting portion (17) according to claim 9, wherein said pushing end (27d') of the pin (17') is provided with a pushing head substantially forming a "T" with said preassembly and assembly parts (27c and 27e).

11. A corner connecting portion (17) according to claim 8, wherein said pin (27") has a substantially circular cross-section and has an assembly part adjacent said free end (27a") which is provided with circumferential ribs (27b"), said pin being continuously tapered.

12. A corner connecting portion (17) according to any of the preceding claims, wherein said corner lower part (28) comprises anchoring means (29) designed to cooperate with said pillar (30) for the fixation of the corner portion thereto.

13. A corner connecting portion (17) according to claim 12, wherein said anchoring means comprise a hook (29) which is embedded in said lower part (28) preferably by overmoulding, and which is designed to be hooked on an inner end (30c) of said pillar (30).

14. A corner connecting portion (17) according to any of the preceding claims, wherein said upper face (25) of its upper part (24) is defined by two sealing lips (25a and 25b) which are designed to be mounted under and in contact with the vehicle bodywork and which are connected together by the wall of said hole (24a), and in that said lower part (28) of this corner portion comprises at least two other sealing lips (28a and 28b) which are designed to be in contact with the window glass (11, 12).

15. A corner connecting portion (17) according to any of the preceding claims, wherein it has in side view substantially an arrows shape, having an arrow point (17a) defined by said corner upper part (24), and a shaft (17b) ending with a fletching (17c) both defined by said corner lower part (28).

16. A sealing gasket for a motor vehicle window glass (11, 12), the gasket forming a side window glass run channel (13, 13') of the hidden frame type which comprises a top segment (14, 14') and two ascending segments (15 and 16, 15' and 16'), this gasket comprising a co-extruded mounting clip (18) of U-shaped right section with first and second mutually parallel limbs (18a and 18b), the first limb (18b) having first sealing lips (23) which are designed to be mounted under and in contact with the vehicle bodywork, the second limb (18a) being provided with a main leg (20) and a secondary leg (21) which both extend perpendicularly from this second limb and which have sealing lips (22) towards their respective ends, this glass run channel incorporating at least one corner connecting portion (17) designed to connect said top segment to one of said ascending segments when mounted on a pillar (30) of the frame, **characterized in that** said at least one corner portion is as defined in any of the preceding claims.

17. A sealing system for a motor vehicle side window glass (11, 12), comprising a frame and a sealing gasket according to claim 16, **characterized in that** this sealing gasket is mounted on a A-pillar and/or a B-pillar and/or a C-pillar of the vehicle, being preferably mounted on a visible B-pillar or C-pillar.
